# EUROPEAN PATENT APPLICATION

(11) **EP 3 393 004 A1**
(43) Date of publication of application: **24.10.2018**
(21) Application number: 17173665.5
(22) Date of filing: 31.05.2017
(51) Int. Cl.: H02J 7/12, H02J 7/14, H02M 1/36

(54) **POWER SAVING TYPE VEHICLE SOCKET APPARATUS**

(30) Priority: 20.04.2017 TW 106205510 U
(71) Applicant: Tang Yang Dies Co., Ltd., New Taipei City (TW)
(72) Inventor: CHEN, Hsu-Chen, New Taipei City (TW)
(74) Representative: Patentanwälte Bals & Vogel

(57) **Abstract**

A power saving type vehicle socket apparatus (5) includes a housing (1), a circuit board (2), a power conversion circuit (21), a power socket (22), a magnetic switch (28), a shroud (3) and a magnetic object (34). The housing (1) includes a tube opening (11). The shroud (3) includes a cap (33). When the cap (33) caps the tube opening (11) of the housing (1), the magnetic switch (28) senses the magnetic object (34) to generate a first signal (S1) to send the first signal (S1) to the power conversion circuit (21), so that the power conversion circuit (21) stop supplying power to the power socket (22). When the cap (33) does not cap the tube opening (11) of the housing (1), the magnetic switch (28) does not sense the magnetic object (34), so that the magnetic switch (28) generates a second signal (S2) to send the second signal (S2) to the power conversion circuit (21), so that the power conversion circuit (21) supplies power to the power socket (22).

## Description

### BACKGROUND OF THE INVENTION

### Field of the Invention

The present invention relates to a vehicle socket apparatus, and especially relates to a power saving type vehicle socket apparatus.

### Description of the Related Art

The related art vehicle socket apparatus is arranged in/on the vehicle (for example, the motorcycle) to supply power to the external electronic apparatus (for example, the cellphone). Therefore, the related art vehicle socket apparatus is very convenient. However, the related art vehicle socket apparatus comprises following disadvantages:
1. When the related art vehicle socket apparatus is not used, the related art vehicle socket apparatus still works to supply power, so it wastes energy a lot.
2. The related art vehicle socket apparatus is exposed to the external environment, so that the related art vehicle socket apparatus is broken easily.
3. The user may incorrectly arrange the positive electrode and the negative electrode of the related art vehicle socket apparatus to cause danger.
4. The related art vehicle socket apparatus does not have the overload protection.

### SUMMARY OF THE INVENTION

In order to solve the above-mentioned problems, an object of the present invention is to provide a power saving type vehicle socket apparatus.

In order to achieve the object of the present invention mentioned above, the power saving type vehicle socket apparatus of the present invention comprises a housing, a circuit board, a power conversion circuit, a power socket, a magnetic switch, a shroud, a magnetic object, a positive-negative-electrode transposition protecting component and an electromagnetic interference filter circuit. The housing comprises a tube opening. The circuit board is arranged in the housing. The power conversion circuit is arranged on the circuit board. The power conversion circuit is electrically connected to the circuit board. The power socket is arranged on the circuit board. The power socket is electrically connected to the power conversion circuit and the circuit board. The magnetic switch is arranged on the circuit board. The magnetic switch is electrically connected to the power conversion circuit and the circuit board. The shroud is connected to the housing. The shroud comprises a cap. The magnetic object is arranged in the cap. The positive-negative-electrode transposition protecting component is arranged on the circuit board. The positive-negative-electrode transposition protecting component is electrically connected to the power conversion circuit and the circuit board. The electromagnetic interference filter circuit is arranged on the circuit board. The electromagnetic interference filter circuit is electrically connected to the power conversion circuit, the circuit board and the power socket. When the cap caps the tube opening of the housing, the magnetic switch senses the magnetic object to generate a first signal to send the first signal to the power conversion circuit, so that the power conversion circuit stop supplying power to the power socket. When the cap does not cap the tube opening of the housing, the magnetic switch does not sense the magnetic object, so that the magnetic switch generates a second signal to send the second signal to the power conversion circuit, so that the power conversion circuit supplies power to the power socket. The magnetic switch comprises a voltage regulator and a magnetic sensor. The voltage regulator is arranged on the circuit board. The voltage regulator is electrically connected to the circuit board. The magnetic sensor is arranged on the circuit board. The magnetic sensor is electrically connected to the power conversion circuit, the circuit board and the voltage regulator.

Moreover, the power saving type vehicle socket apparatus mentioned above further comprises a plurality of electric leads. The electric leads are electrically connected to the circuit board. The housing further comprises a plurality of apertures. The electric leads pass through the apertures.

Moreover, the power saving type vehicle socket apparatus mentioned above further comprises a plurality of ferrules. The ferrules are arranged in the apertures. The ferrule comprises a neck and a through hole. The neck of the ferrule buckles in the aperture. The electric lead passes through the through hole.

Moreover, the power saving type vehicle socket apparatus mentioned above further comprises an end cap, a flange, a rotary knob, an external thread section and a catching groove. The end cap is fixedly connected to the tube opening of the housing. The end cap comprises a base hole. The base hole is used to accommodate the power socket. The flange is arranged on the housing. The rotary knob is connected to the housing. The rotary knob comprises an internal thread section. The external thread section is arranged on the housing. The external thread section screws combining to the internal thread section of the rotary knob. The catching groove is connected to the flange.

Moreover, the shroud further comprises a neckband, a shroud ring, a cramp ring and a tongue piece. The neckband is connected to the cap. The shroud ring is connected to the neckband and the flange. The cramp ring is arranged in the cap and fastens to the catching groove. The tongue piece is connected to the cap. The shroud is made of high polymer materials. The shroud is transparent or semitransparent. The shroud is an elastomer.

Moreover, the power saving type vehicle socket apparatus mentioned above further comprises a locating plate and a screw. The locating plate is arranged on the circuit board. The locating plate comprises a fixed orifice and a plurality of stitches. The stitches are used to insert connecting to the circuit board. The housing further comprises a perforation. The screw is screwed fixedly to the fixed orifice through the perforation, so that the circuit board is fixedly arranged in the tube opening of the housing.

Moreover, the power saving type vehicle socket apparatus mentioned above further comprises a light-emitting component and a light-guiding plate. The light-emitting component is arranged on the circuit board. The light-emitting component is electrically connected to the power conversion circuit and the circuit board. The light-guiding plate is arranged on the light-emitting component. The light-guiding plate is used to diffuse the light which is emitted from the light-emitting component.

The advantage of the present invention is that when the power saving type vehicle socket apparatus is not used and the cap caps the tube opening of the housing, the power conversion circuit stops supplying power to the power socket to save power. Moreover, the shroud protects the power socket, so that the power socket is not broken easily. Moreover, the positive-negative-electrode transposition protecting component is used to avoid incorrectly inversely connecting to a battery. Moreover, the power conversion circuit has the overload protection.

Please refer to the detailed descriptions and figures of the present invention mentioned below for further understanding the technology, method and effect of the present invention. The figures are only for references and descriptions, and the present invention is not limited by the figures.

### BRIEF DESCRIPTION OF DRAWING

Fig. 1 shows an exploded assembly drawing of the power saving type vehicle socket apparatus of the present invention.
Fig. 2 shows an exploded assembly drawing from another view of the power saving type vehicle socket apparatus of the present invention.
Fig. 3 shows a schematic diagram that the power saving type vehicle socket apparatus of the present invention supplies power.
Fig. 4 shows a schematic diagram that the power saving type vehicle socket apparatus of the present invention does not supply power.
Fig. 5 shows a circuit diagram of the power saving type vehicle socket apparatus of the present invention.

### DETAILED DESCRIPTION OF THE INVENTION

Please refer to following detailed description and figures for the technical content of the present invention:

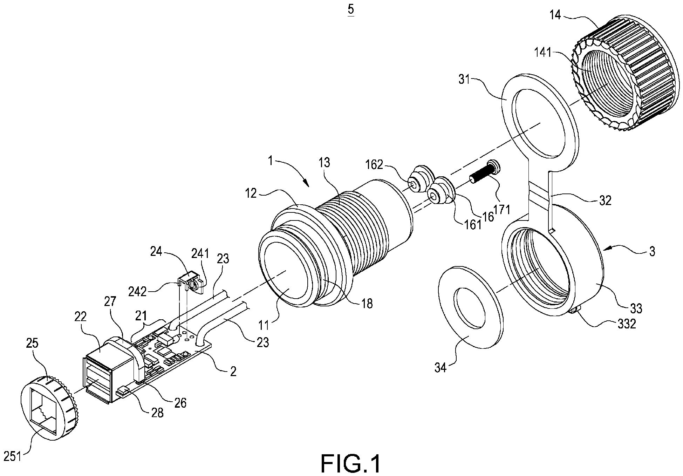

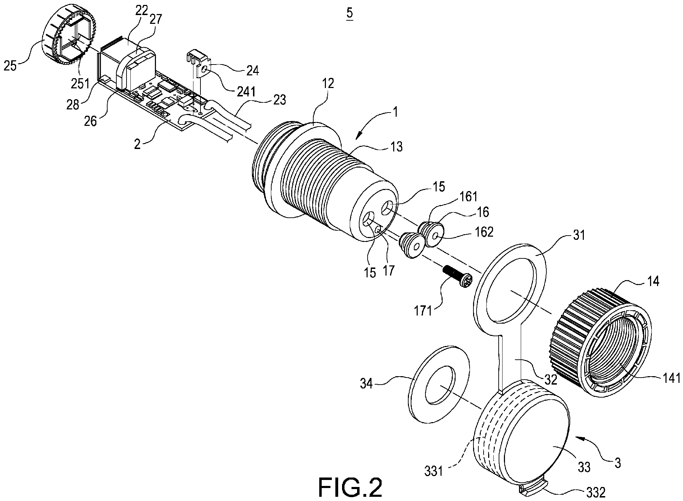

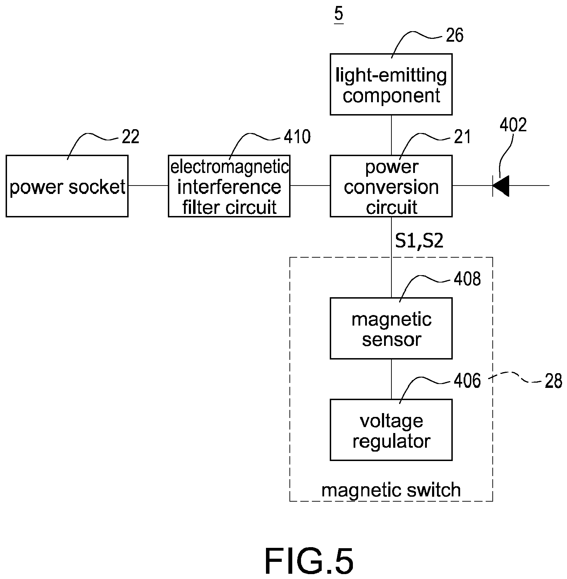

Fig. 1 shows an exploded assembly drawing of the power saving type vehicle socket apparatus of the present invention. Fig. 2 shows an exploded assembly drawing from another view of the power saving type vehicle socket apparatus of the present invention. Fig. 5 shows a circuit diagram of the power saving type vehicle socket apparatus of the present invention.

Following contents introduce all components of the present invention:
A power saving type vehicle socket apparatus 5 of the present invention comprises a housing 1, a circuit board 2, a shroud 3, a flange 12, an external thread section 13, a rotary knob 14, a plurality of ferrules 16, a catching groove 18, a power conversion circuit 21, a power socket 22, a plurality of electric leads 23, a locating plate 24, an end cap 25, a light-emitting component 26, a light-guiding plate 27, a magnetic switch 28, a magnetic object 34, a screw 171, a positive-negative-electrode transposition protecting component 402 and an electromagnetic interference filter circuit 410.

The housing 1 comprises a tube opening 11, a plurality of apertures 15 and a perforation 17. The shroud 3 comprises a shroud ring 31, a neckband 32, a cap 33, a cramp ring 331 and a tongue piece 332. The rotary knob 14 comprises an internal thread section 141. The ferrule 16 comprises a neck 161 and a through hole 162. The locating plate 24 comprises a fixed orifice 241 and a plurality of stitches 242. The end cap 25 comprises a base hole 251. The magnetic switch 28 comprises a voltage regulator 406 and a magnetic sensor 408.

Following contents introduce the connection relationships of the components mentioned above:
The circuit board 2 is arranged in the housing 1. The power conversion circuit 21 is arranged on the circuit board 2. The power conversion circuit 21 is electrically connected to the circuit board 2. The power socket 22 is arranged on the circuit board 2. The power socket 22 is electrically connected to the power conversion circuit 21 and the circuit board 2. The magnetic switch 28 is arranged on the circuit board 2. The magnetic switch 28 is electrically connected to the power conversion circuit 21 and the circuit board 2. The shroud 3 is connected to the housing 1. The magnetic object 34 is arranged in the cap 33.

The positive-negative-electrode transposition protecting component 402 is arranged on the circuit board 2. The positive-negative-electrode transposition protecting component 402 is electrically connected to the power conversion circuit 21 and the circuit board 2. The voltage regulator 406 is arranged on the circuit board 2. The voltage regulator 406 is electrically connected to the circuit board 2. The magnetic sensor 408 is arranged on the circuit board 2. The magnetic sensor 408 is electrically connected to the power conversion circuit 21, the circuit board 2 and the voltage regulator 406. The electromagnetic interference filter circuit 410 is arranged on the circuit board 2. The electromagnetic interference filter circuit 410 is electrically connected to the power conversion circuit 21, the circuit board 2 and the power socket 22.

The electric leads 23 are electrically connected to the circuit board 2. The electric leads 23 pass through the apertures 15. The ferrules 16 are arranged in the apertures 15. The neck 161 of the ferrule 16 buckles in the aperture 15. The electric lead 23 passes through the through hole 162. The end cap 25 is fixedly connected to the tube opening 11 of the housing 1. The base hole 251 is used to accommodate the power socket 22. The flange 12 is arranged on the housing 1. The rotary knob 14 is connected to the housing 1. The external thread section 13 is arranged on the housing 1. The external thread section 13 screws combining to the internal thread section 141 of the rotary knob 14. The catching groove 18 is connected to the flange 12.

The neckband 32 is connected to the cap 33. The shroud ring 31 is connected to the neckband 32 and the flange 12. The cramp ring 331 is arranged in the cap 33 and fastens to the catching groove 18. The tongue piece 332 is connected to the cap 33. The shroud 3 is made of high polymer materials. The shroud 3 is transparent or semitransparent. The shroud 3 is an elastomer. The locating plate 24 is arranged on the circuit board 2. The stitches 242 are used to insert connecting to the circuit board 2. The screw 171 is screwed fixedly to the fixed orifice 241 through the perforation 17, so that the circuit board 2 is fixedly arranged in the tube opening 11 of the housing 1. The light-emitting component 26 is arranged on the circuit board 2. The light-emitting component 26 is electrically connected to the power conversion circuit 21 and the circuit board 2. The light-guiding plate 27 is arranged on the light-emitting component 26. The light-guiding plate 27 is used to diffuse the light which is emitted from the light-emitting component 26.

Following contents introduce the main operating principles of the present invention:

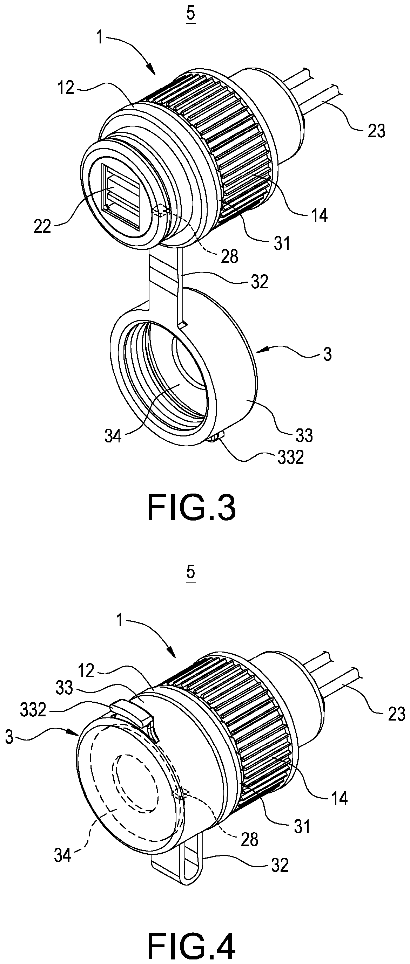

Fig. 3 shows a schematic diagram that the power saving type vehicle socket apparatus of the present invention supplies power. Fig. 4 shows a schematic diagram that the power saving type vehicle socket apparatus of the present invention does not supply power. Please refer to Fig. 1, Fig. 2 and Fig. 5 at the same time.

When the cap 33 caps the tube opening 11 of the housing 1, the magnetic switch 28 senses the magnetic object 34 to generate a first signal S1 to send the first signal S1 to the power conversion circuit 21, so that the power conversion circuit 21 stop supplying power to the power socket 22. When the cap 33 does not cap the tube opening 11 of the housing 1, the magnetic switch 28 does not sense the magnetic object 34, so that the magnetic switch 28 generates a second signal S2 to send the second signal S2 to the power conversion circuit 21, so that the power conversion circuit 21 supplies power to the power socket 22.

Moreover, the power conversion circuit 21 is, for example but not limited to, a direct-current-to-direct-current converter to convert a voltage of a battery (not shown in the figures) into a voltage which is supplied to the power socket 22. The power conversion circuit 21 has the overload protection and the over-temperature protection. The power socket 22 is, for example but not limited to, a universal serial bus connector. The magnetic object 34 is, for example but not limited to, a ring permanent magnet. The shroud 3 is, for example but not limited to, made of light-passing materials. The positive-negative-electrode transposition protecting component 402 is, for example but not limited to, a diode. The positive-negative-electrode transposition protecting component 402 is used to avoid incorrectly inversely connecting to the battery. The voltage regulator 406 is used to supply power to the magnetic sensor 408. The electromagnetic interference filter circuit 410 is used to filtering electromagnetic interference. A diameter of the through hole 162 is slightly smaller than an outside diameter of the electric lead 23 to block fluids or dusts. When the power conversion circuit 21 supplies power to the power socket 22, the power conversion circuit 21 supplies power to the light-emitting component 26 to drive the light-emitting component 26 to light to remind the user. The flange 12 and the rotary knob 14 can together clamp a vehicle.

The advantage of the present invention is that when the power saving type vehicle socket apparatus 5 is not used and the cap 33 caps the tube opening 11 of the housing 1, the power conversion circuit 21 stops supplying power to the power socket 22 to save power. Moreover, the shroud 3 protects the power socket 22, so that the power socket 22 is not broken easily. Moreover, the positive-negative-electrode transposition protecting component 402 is used to avoid incorrectly inversely connecting to the battery. Moreover, the power conversion circuit 21 has the overload protection.

## Claims

1. A power saving type vehicle socket apparatus (5) comprising:
a housing (1) comprising a tube opening (11);
a circuit board (2) arranged in the housing (1);
a power conversion circuit (21) arranged on the circuit board (2) and electrically connected to the circuit board (2);
a power socket (22) arranged on the circuit board (2) and electrically connected to the power conversion circuit (21) and the circuit board (2);
a magnetic switch (28) arranged on the circuit board (2) and electrically connected to the power conversion circuit (21) and the circuit board (2);
a shroud (3) connected to the housing (1) and comprising a cap (33);
a magnetic object (34) arranged in the cap (33);
a positive-negative-electrode transposition protecting component (402) arranged on the circuit board (2) and electrically connected to the power conversion circuit (21) and the circuit board (2); and
an electromagnetic interference filter circuit (410) arranged on the circuit board (2) and electrically connected to the power conversion circuit (21), the circuit board (2) and the power socket (22),
wherein when the cap (33) caps the tube opening (11) of the housing (1), the magnetic switch (28) senses the magnetic object (34) to generate a first signal (S1) to send the first signal (S1) to the power conversion circuit (21), so that the power conversion circuit (21) stop supplying power to the power socket (22); when the cap (33) does not cap the tube opening (11) of the housing (1), the magnetic switch (28) does not sense the magnetic object (34), so that the magnetic switch (28) generates a second signal (S2) to send the second signal (S2) to the power conversion circuit (21), so that the power conversion circuit (21) supplies power to the power socket (22);
wherein the magnetic switch (28) comprises:
a voltage regulator (406) arranged on the circuit board (2) and electrically connected to the circuit board (2); and
a magnetic sensor (408) arranged on the circuit board (2) and electrically connected to the power conversion circuit (21), the circuit board (2) and the voltage regulator (406).

2. The power saving type vehicle socket apparatus (5) in claim 1 further comprising:
a plurality of electric leads (23) electrically connected to the circuit board (2),
wherein the housing (1) further comprises a plurality of apertures (15); the electric leads (23) pass through the apertures (15).

3. The power saving type vehicle socket apparatus (5) in claim 2 further comprising:
a plurality of ferrules (16) arranged in the apertures (15),
wherein the ferrule (16) comprises a neck (161) and a through hole (162); the neck (161) of the ferrule (16) buckles in the aperture (15); the electric lead (23) passes through the through hole (162).

4. The power saving type vehicle socket apparatus (5) in claim 1 further comprising:
an end cap (25) fixedly connected to the tube opening (11) of the housing (1), the end cap (25) comprising a base hole (251), the base hole (251) used to accommodate the power socket (22);
a flange (12) arranged on the housing (1);
a rotary knob (14) connected to the housing (1), the rotary knob (14) comprising an internal thread section (141);
an external thread section (13) arranged on the housing (1), the external thread section (13) screwing combining to the internal thread section (141) of the rotary knob (14); and
a catching groove (18) connected to the flange (12).

5. The power saving type vehicle socket apparatus (5) in claim 4, wherein the shroud (3) further comprises:
a neckband (32) connected to the cap (33);
a shroud ring (31) connected to the neckband (32) and the flange (12);
a cramp ring (331) arranged in the cap (33) and fastening to the catching groove (18); and
a tongue piece (332) connected to the cap (33),
wherein the shroud (3) is made of high polymer materials; the shroud (3) is transparent or semitransparent; the shroud (3) is an elastomer.

6. The power saving type vehicle socket apparatus (5) in claim 1 further comprising:
a locating plate (24) arranged on the circuit board (2), the locating plate (24) comprising a fixed orifice (241) and a plurality of stitches (242), the stitches (242) used to insert connecting to the circuit board (2); and
a screw (171),
wherein the housing (1) further comprises a perforation (17); the screw (171) is screwed fixedly to the fixed orifice (241) through the perforation (17), so that the circuit board (2) is fixedly arranged in the tube opening (11) of the housing (1).

7. The power saving type vehicle socket apparatus (5) in claim 1 further comprising:
a light-emitting component (26) arranged on the circuit board (2), the light-emitting component (26) electrically connected to the power conversion circuit (21) and the circuit board (2); and
a light-guiding plate (27) arranged on the light-emitting component (26), the light-guiding plate (27) used to diffuse a light emitted from the light-emitting component (26).
